# EUROPÄISCHE PATENTSCHRIFT

(11) **EP 2 991 866 B1**
(45) Veröffentlichungstag und Bekanntmachung des Hinweises auf die Patenterteilung: **20.02.2019**
(21) Anmeldenummer: 14716571.6
(22) Anmeldetag: 10.04.2014
(51) Int. Cl.: B60T 8/17

(54) **VERFAHREN UND VORRICHTUNG ZUR STEUERUNG EINER ABS-FUNKTION EINES MOTORRADS**
METHOD AND DEVICE FOR CONTROLLING AN ABS FUNCTION OF A MOTORCYCLE
PROCÉDÉ ET DISPOSITIF DE COMMANDE D'UNE FONCTION ABS D'UN MOTOCYCLE

(30) Priorität: 02.05.2013 DE 102013208007
(43) Veröffentlichungstag der Anmeldung: 09.03.2016
(73) Patentinhaber: Bayerische Motoren Werke Aktiengesellschaft, 80809 München (DE)
(72) Erfinder: MAYER, Anton, 85298 Scheyern (DE)
(86) Internationale Anmeldenummer: PCT/EP2014/057230
(87) Internationale Veröffentlichungsnummer: WO 2014/177353

(56) Entgegenhaltungen:
- DE-A1- 4 330 121
- DE-A1-102010 031 140

## Beschreibung

Die Erfindung betrifft einerseits ein Verfahren und andererseits eine Vorrichtung zur Steuerung einer ABS-Funktion eines Motorrads, insbesondere an einem Hinterrad des Motorrads.

Bei einem mit ABS ausgestatteten Motorrad werden beispielsweise beide Räder bei einem Bremsvorgang geregelt, sodass keines der Räder blockiert. Es ist auch möglich, dass beispielsweise nur an dem Hinterrad eine ABS-Funktion realisiert ist. Beispielsweise bei engen Kurven kann es allerdings beispielsweise im Sportbereich von Vorteil sein, sogenannte Bremsdrifts geschwindigkeitsabhängig mit einem blockierenden Hinterrad durchzuführen.

DE 10 2010 031140 A1 offenbart ein Verfahren zum Steuern einer ABS-Bremsanlage eines Motorrads, bei dem eine ABS-Regelung einer Hinterradbremse des Motorrads deaktiviert wird, wenn das Motorrad durch Betätigen eines Fußbremshebels gebremst wird.

DE 43 30 121 A1 offenbart ein Antiblockierregelsystem mit Diagnoseeinrichtung, Abschalteinrichtung und Warneinrichtung, das durch eine weitere Abschalteinrichtung vom Fahrer willkürlich außer Betrieb gesetzt werden kann. Hierzu müssen gleichzeitig mindestens zwei Schaltbedingungen erfüllt sein.

Die Aufgabe die der Erfindung zugrunde liegt ist es einerseits ein Verfahren und andererseits eine Vorrichtung zu schaffen, das beziehungsweise die dazu beiträgt, Bremsdrifts zu ermöglichen.

Die Aufgabe wird gelöst durch die Merkmale der unabhängigen Patentansprüche. Vorteilhafte Ausgestaltungen sind in den Unteransprüchen gekennzeichnet.

Die Erfindung zeichnet sich aus, einerseits durch ein Verfahren und andererseits durch eine korrespondierende Vorrichtung zur Steuerung einer ABS-Funktion eines Motorrads mit einer Fußbremse. Es wird ermittelt, ob die Fußbremse betätigt wird. Es wird ein Geschwindigkeitswert bereitgestellt, der repräsentativ ist für eine Geschwindigkeit des Motorrads. Der Geschwindigkeitswert wird mit einem vorgegebenen Geschwindigkeitsschwellenwert verglichen. Falls der Geschwindigkeitswert eine geringere Geschwindigkeit repräsentiert als der Geschwindigkeitsschwellenwert und falls ermittelt wurde, dass die Fußbremse betätigt wird, wird die ABS-Funktion für das Hinterrad des Motorrads deaktiviert. Das Deaktivieren der ABS-Funktion erfolgt ausgehend von einem aktivierten Zustand rampenförmig.

Durch die geschwindigkeitsabhängige Deaktivierung der ABS-Funktion kann ein Anbremsdrift beziehungsweise ein Blockieren des Hinterrads bei gleichzeitig hoher Sicherheit ermöglicht werden. Der Geschwindigkeitsschwellenwert ist beispielsweise fahrzeugspezifisch vorgegeben. So kann beispielsweise ein Touring-Motorrad einen anderen Geschwindigkeitsschwellenwert aufweisen als ein Sportmotorrad.

Indem das Deaktivieren der ABS-Funktion ausgehend von einem aktivierten Zustand rampenförmig erfolgt, wird das ABS nicht abrupt abgeschaltet, sondern klingt sanft aus. Hierdurch kann gegebenenfalls die Sicherheit weiter erhöht werden.

Um die Sicherheit weiter zu erhöhen, kann beispielsweise die ABS-Funktion an einer Handbremse beibehalten werden. So kann die geschwindigkeitsabhängige Deaktivierung der ABS-Funktion mittels der Fußbremse sowohl bei Teilintegralsystemen, Vollintegralsystemen und/oder 2-Kanal ABS-Systemen realisiert werden.

Bei Teilintegralsystemen aktiviert ein Fahrer über die Handbremse gleichzeitig die Bremsen beider Räder, die Fußbremse wirkt allein auf die Hinterradbremse. So kann bei Teilintegralsystemen die ABS-Funktion an dem Hinterrad beispielsweise bei Betätigung der Handbremse nicht deaktiviert werden.

Bei Vollintegralsystemen verzögern immer beide Räder, egal ob ausschließlich die Hand- oder die Fußbremse bedient wird. So kann bei Vollintegralsystemen beispielsweise bei Betätigung der Fußbremse die ABS-Funktion am Hinterrad geschwindigkeitsabhängig deaktiviert werden und gleichzeitig am Vorderrad beibehalten werden.

Gemäß einer vorteilhaften Ausgestaltung ist der Geschwindigkeitsschwellenwert fest vorgegeben. Hierdurch kann die Sicherheit weiter erhöht werden, da sichergestellt ist, dass der Geschwindigkeitsschwellenwert nicht verändert wird.

Gemäß einer weiteren vorteilhaften Ausgestaltung ist der Geschwindigkeitsschwellenwert von einem Nutzer des Motorrads einstellbar. Hierdurch kann der Nutzer den Geschwindigkeitsschwellenwert an seine Bedürfnisse anpassen.

Gemäß einer weiteren vorteilhaften Ausgestaltung liegt der Geschwindigkeitsschwellenwert ungefähr bei 30 km/h. Bei Versuchen hat sich überaschender Weise herausgestellt, dass gerade bei Geschwindigkeiten bis zu 30 km/h ein Anbremsdrift bei gleichzeitig sehr hoher Sicherheit ermöglicht werden kann und bei Geschwindigkeiten über 30 km/h die Sicherheit gegebenenfalls nicht mehr gewährleistet werden kann.

Ausführungsbeispiele der Erfindung sind im Folgenden anhand der schematischen Zeichnung näher erläutert.

Es zeigt:

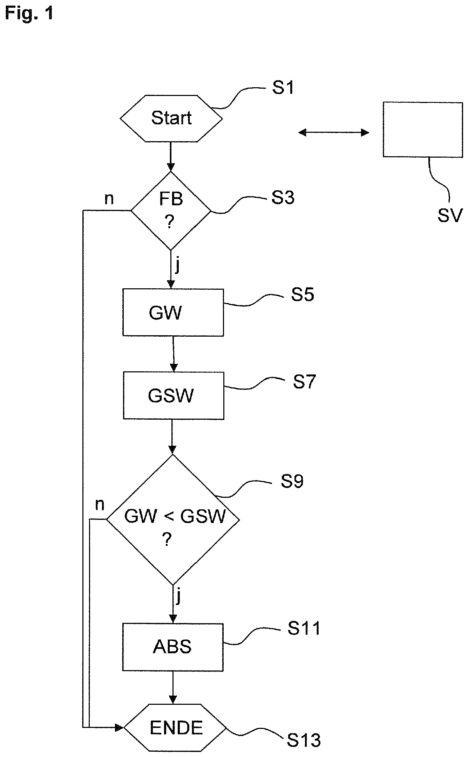

Figur 1 ein Ablaufdiagramm zur Steuerung einer ABS-Funktion eines Motorrads.

Figur 1 zeigt ein Ablaufdiagramm eines Programms zur Steuerung einer ABS-Funktion ABS eines Motorrads. Das Programm wird insbesondere in einer Steuervorrichtung SV des Motorrads abgearbeitet. Die Steuervorrichtung SV weist hierfür eine Recheneinheit sowie einen Daten- und Programmspeicher auf. Des Weiteren weist die Steuervorrichtung SV beispielsweise eine Schnittstelle auf mit der sie beispielsweise mit Sensoren des Motorrads gekoppelt ist zum Empfangen von Sensordaten.

Die Steuervorrichtung SV kann auch als Vorrichtung zur Steuerung einer ABS-Funktion eines Motorrads bezeichnet werden.

Das Programm, das in der Steuervorrichtung SV abgearbeitet wird, wird in einem Schritt S1 gestartet, in dem gegebenenfalls Variablen initialisiert werden können.

In einem Schritt S3 wird ermittelt, ob eine Fußbremse FB des Motorrads betätigt wird. Die Ermittlung ob die Fußbremse FB betätigt wird erfolgt beispielsweise über einen Drucksensor der beispielsweise in einem hinteren Steuerkreis des Motorrads angebracht ist. Der Drucksensor ist beispielsweise mit der Schnittstelle der Steuervorrichtung SV gekoppelt, so dass die Steuervorrichtung SV Sensordaten des Drucksensors empfangen kann.

Beispielsweise bei 2-Kanal ABS-Systemen kann die Ermittlung ob die Fußbremse FB betätigt wird, alternativ oder zusätzlich beispielsweise mittels Radrehzahlsensoren des Vorder- und/oder Hinterrads erfolgen.

Wird ermittelt, dass die Fußbremse FB betätigt wird, so wird das Programm in einem Schritt S5 fortgesetzt. Wird ermittelt, dass die Fußbremse FB nicht betätigt wird, so wird das Programm in einem Schritt S13 fortgesetzt.

In dem Schritt S5 wird ein Geschwindigkeitswert GW bereitgestellt, der repräsentativ ist für eine Geschwindigkeit des Motorrads. Der Geschwindigkeitswert GW wird beispielsweise innerhalb der Steuervorrichtung SV ermittelt und dem Programm in dem Schritt S5 bereitgestellt. Alternativ kann der Geschwindigkeitswert GW auch außerhalb der Steuervorrichtung SV ermittelt werden und mittels der Schnittstelle der Steuervorrichtung SV dem Programm bereitgestellt werden.

In einem Schritt S7 wird ein Geschwindigkeitsschwellenwert GSW bereitgestellt. Der Geschwindigkeitsschwellenwert GSW ist beispielsweise fest vorgegeben. So ist er beispielsweise fest in der Steuervorrichtung SV einprogrammiert. Alternativ oder zusätzlich kann der Geschwindigkeitsschwellenwert GSW beispielsweise von einem Nutzer des Motorrads eingestellt werden. Dies kann beispielsweise mittels Bedienelementen am Lenker des Motorrads erfolgen. Der einprogrammierte Geschwindigkeitsschwellenwert GSW liegt beispielsweise bei 30 km/h. Alternativ kann der Geschwindigkeitsschwellenwert GSW auch größer oder kleiner als 30 km/h sein. Der Geschwindigkeitsschwellenwert GSW ist beispielsweise fahrzeugspezifisch vorgegeben.

In einem Schritt S9 wird der bereitgestellte Geschwindigkeitswert GW mit dem Geschwindigkeitsschwellenwert GSW verglichen. Repräsentiert der Geschwindigkeitswert GW eine Geschwindigkeit, die geringer ist als die Geschwindigkeit, die der Geschwindigkeitsschwellenwert GSW repräsentiert, so wird das Programm in einem Schritt S11 fortgesetzt. Repräsentiert er eine höhere Geschwindigkeit, so wird das Programm in dem Schritt S13 fortgesetzt.

In dem Schritt S11 wird die ABS-Funktion ABS für das Hinterrad des Motorrads deaktiviert. Die Deaktivierung der ABS-Funktion ABS kann beispielsweise ausgehend von einem aktivierten Zustand rampenförmig erfolgen. Die rampenförmige Deaktivierung beteutet in diesem Zusammenhang, dass die ABS-Funktion ABS beispielsweise immer weniger stark eingreift, bevor sie ganz deaktiviert wird. Hierdurch kann beispielsweise ein sanftes Ausklingen der ABS-Funktion ABS realisiert werden. Unabhängig vom ABS-System kann beispielsweise gleichzeitig die ABS-Funktion ABS des Vorderrads beibehalten werden.

In dem Schritt S13 wird das Programm beendet und kann gegebenenfalls wieder in dem Schritt S1 gestartet werden.

Die Schritte S3-S11 können alternativ auch in anderer Reihenfolge abgearbeitet werden, so ist es beispielsweise möglich dass erst die Geschwindigkeit des Motorrads überprüft wird und anschließend überprüft wird, ob die Fußbremse FB betätigt wird.

### Bezugszeichenliste

- ABS: ABS-Funkion
- FB: Fußbremse
- GSW: Geschwindigkeitsschwellenwert
- GW: Geschwindigkeitswert
- SV: Steuervorrichtung

## Patentansprüche

1. Verfahren zur Steuerung einer ABS-Funktion (ABS) eines Motorrads mit einer Fußbremse (FB), bei dem
- ermittelt wird, ob die Fußbremse (FB) betätigt wird,
- ein Geschwindigkeitswert (GW) bereitgestellt wird, der repräsentativ ist für eine Geschwindigkeit des Motorrads,
- der Geschwindigkeitswert (GW) mit einem vorgegebenen Geschwindigkeitsschwellenwert (GSW) verglichen wird,
- falls der Geschwindigkeitswert (GW) eine geringere Geschwindigkeit repräsentiert als der Geschwindigkeitsschwellenwert (GSW) und falls ermittelt wurde, dass die Fußbremse (FB) betätigt wird, die ABS-Funktion (ABS) für das Hinterrad des Motorrads deaktiviert wird, wobei das Deaktivieren der ABS-Funktion (ABS) ausgehend von einem aktivierten Zustand rampenförmig erfolgt.

2. Verfahren nach Anspruch 1, bei dem der Geschwindigkeitsschwellenwert (GSW) fest vorgegeben ist.

3. Verfahren nach einem der vorhergehenden Ansprüche, bei dem der Geschwindigkeitsschwellenwert (GSW) von einem Nutzer des Motorrads einstellbar ist.

4. Verfahren nach einem der vorhergehenden Ansprüche, bei dem der Geschwindigkeitsschwellenwert (GSW) bei ungefähr 30 km/h liegt.

5. Vorrichtung zur Steuerung einer ABS-Funktion (ABS) eines Motorrads, wobei die Vorrichtung dazu ausgebildet ist, ein Verfahren nach einem der Ansprüche 1 bis 4 auszuführen.

## Claims

1. A method for controlling an ABS function (ABS) of a motorcycle with a foot brake (FB), in which
- it is ascertained whether the foot brake (FB) is actuated,
- a speed value (GW) which is representative of a speed of the motorcycle is provided,
- the speed value (GW) is compared with a specified speed threshold value (GSW),
- if the speed value (GW) represents a lower speed than the speed threshold value (GSW) and if it has been ascertained that the foot brake (FB) is actuated, the ABS function (ABS) for the rear wheel of the motorcycle is deactivated, the deactivation of the ABS function (ABS) taking place in ramp-like manner starting from an activated state.

2. A method according to Claim 1, in which the speed threshold value (GSW) is firmly set.

3. A method according to one of the preceding claims, in which the speed threshold value (GSW) can be set by a user of the motorcycle.

4. A method according to one of the preceding claims, in which the speed threshold value (GSW) is approximately 30 km/h.

5. A device for controlling an ABS function (ABS) of a motorcycle, wherein the device is designed to carry out a method according to one of Claims 1 to 4.

## Revendications

1. Procédé permettant de commander une fonction ABS-(ABS) d'une moto avec une pédale de frein (FB), selon lequel on détermine si la pédale de frein (FB) est actionnée,
- on se procure une valeur de vitesse (GW) qui est représentative de la vitesse de la moto,
- on compare la valeur de vitesse (GW) avec une valeur de seuil prédéfinie de la vitesse (GSW),
- lorsque la valeur de vitesse (GW) représente une vitesse plus faible que la valeur de seuil (GSW) de la vitesse, et qu'il a été déterminé que la pédale de frein (FB) est actionnée, la fonction ABS-(ABS) pour la roue arrière de la moto et désactivée, la désactivation de la fonction ABS-(ABS) étant effectuée sous la forme d'une rampe à partir de l'état activé.

2. Procédé conforme à la revendication 1,
selon lequel la valeur de seuil (GSW) de la vitesse est préfinie de façon fixe.

3. Procédé conforme à l'une des revendications précédentes,
selon lequel la valeur de seuil (GSW) de la vitesse peut être réglée par l'utilisateur de la moto.

4. Procédé conforme à l'une des revendications précédentes, selon lequel la valeur de seuil (GSW) de la vitesse est environ égale à 30 km/h.

5. Dispositif de commande d'une fonction ABS-(ABS) d'une moto, ce dispositif étant réalisé pour permettre la mise en oeuvre d'un procédé conforme à l'une des revendications 1 à 4.
